(19) Europäisches Patentamt
European Patent Office
Office européen des brevets

(11) **EP 1 985 105 B1**

(12) **EUROPÄISCHE PATENTSCHRIFT**

(45) Veröffentlichungstag und Bekanntmachung des Hinweises auf die Patenterteilung:
**24.08.2011  Patentblatt 2011/34**

(21) Anmeldenummer: **06841280.8**

(22) Anmeldetag: **01.12.2006**

(51) Int Cl.:
*H04N 1/48* (2006.01)          *H04N 1/193* (2006.01)

(86) Internationale Anmeldenummer:
**PCT/EP2006/069197**

(87) Internationale Veröffentlichungsnummer:
**WO 2007/093241 (23.08.2007 Gazette 2007/34)**

(54) **VERFAHREN UND VORRICHTUNG ZUM SCANNEN VON BILDERN**

METHOD AND DEVICE FOR SCANNING IMAGES

PROCÉDÉ ET DISPOSITIF POUR LE BALAYAGE D'IMAGES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **14.02.2006  DE 102006006835**

(43) Veröffentlichungstag der Anmeldung:
**29.10.2008  Patentblatt 2008/44**

(73) Patentinhaber: **OCE Printing Systems GmbH
85586 Poing (DE)**

(72) Erfinder: **FREI, Bernhard
78465 Konstanz (DE)**

(74) Vertreter: **Schaumburg, Thoenes, Thurn,
Landskron, Eckert
Patentanwälte
Postfach 86 07 48
81634 München (DE)**

(56) Entgegenhaltungen:
EP-A2- 1 173 029          WO-A-01/99431
WO-A-2005/114573          DE-A1- 3 418 787
DE-A1- 19 835 348          US-A1- 5 923 447

**Beschreibung**

Die vorliegende Erfindung betrifft ein Verfahren und eine Vorrichtung zum Scannen von Bildern, wobei ein Quellbild mittels mehrere Farbsensorelemente abgetastet wird. Das Quellbild kann sowohl ein Schwarz/Weiß-Bild als auch ein Farbbild sein. Das durch das Scannen erzeugte Zielbild ist ein Schwarz/Weiß-Bild.

Es ist bekannt, dass mit einem Farbscanner, der mehrere Farbsensorelemente aufweist, Schwarz/Weiß-Bilder gescannt werden können. Hierbei wird üblicherweise das Quellbild in gleicher Weise wie ein Farbbild abgetastet und das so erhaltenen Pseudo-Farbbild entsprechend korrigiert, so dass die Graustufen im Zielbild möglichst gut mit dem entsprechenden Helligkeitswerten im Quellbild übereinstimmen. Bei diesen bekannten Verfahren werden Schwarz/Weiß-Bilder mit der gleichen Geschwindigkeit und mit der gleichen Auflösung wie Farbbilder gescannt.

Aus der US 5,923,447 geht ein Verfahren zum Abtasten eines Bildes hervor, wobei ein Sensor mit drei unterschiedlichen Zeilenarrays für die Grundfarben Blau, Grün und Rot verwendet wird. Die Zeilenarrays sind örtlich zueinander versetzt angeordnet, so dass die entsprechenden Lesezeilen auf dem Quellbild auch zueinander versetzt sind. Es ist ein Beispiel angegeben, bei dem die abgetasteten Zeilen jeweils 100 Zeilen voneinander beabstandet sind. Um mit diesem Sensor ein Schwarz/Weiß-Bild zu erhalten, werden die Bildpunkte der unter-schiedlichen Farbauszüge entsprechend dem Abstand von 100 Zeilen verschoben und miteinander addiert. Hierdurch wird sichergestellt, dass die Werte der Bildpunkte der unterschiedlichen Zeilenarrays miteinander addiert werden, die durch Abtastung des gleichen Punktes auf dem Quellbild erzeugt worden sind. Die Summe dieser Werte ergibt somit einen Grauwert im Schwarz/Weiß-Bild.

Aus der DE 198 35 348 A1 geht ein Verfahren und eine Vorrichtung zur pixel- und zeilenweisen Abtastung von Vorlagen hervor, wobei zur Erhöhung der Abtastauflösung mehrere Photodiodenzeilen verwendet werden. Die Photodiodenzeilen sind in ihrer Längsrichtung ein Stück zueinander versetzt, wobei die Sensorelemente der einen Photodiodenzeile im Bereich der Lücke der anderen Photodiodenzeile angeordnet sind. Zur Abtastung von farbigen Vorlagen können auch drei farbselektive Photodiodenzeilen verwendet werden, die jeweils um ein Drittel der Ausdehnung ei-nes Sensorelementes in Längsausdehnung der Photodiodenzeilen zueinander versetzt sind. Weiterhin wird vorgeschlagen, mehrere Gruppen von Photodiodenzeilen für die Farbanteile Rot, Grün und Blau zu verwenden, wobei die Photodiodenzeilen einer Gruppe in Längsrichtung zueinander versetzt angeordnet sind.

Aus der nachveröffentlichten Europäischen Patentanmeldung EP 1 961 207 A1 bzw. der korrespondierenden internationalen Patentanmeldung WO 2007/062679 A1 (PCT/EP2005/012882) geht ein Verfahren zum Abtasten von Bildern mittels einer Vorrichtung, die mehrere Farbsensoren aufweist, hervor, um ein Zielbild als Schwarz/Weiß-Bild zu erstellen. Bei dieser Vorrichtung ist die Abtastgeschwindigkeit und/oder die Auflösung gegenüber herkömmlichen Verfahren erhöht. Der grundsätzliche Unterschied dieses Verfahrens zu den herkömmlichen Verfahren liegt darin, dass einzelne Bildpunkte (Pixel) des Quellbildes nicht jeweils von allen Farbsensorelementen sondern lediglich von jeweils einem einzigen Farbsensorelement abgetastet werden, wodurch es möglich ist, dass die mehreren Farbsensorelemente gleichzeitig mehrere Bildpunkte abtasten. Hierdurch wird die Abtastgeschwindigkeit erhöht, bzw. eine wesentlich höhere Auflösung bei gleicher Abtastgeschwindigkeit wie bei herkömmlichen Scannvorrichtungen erzielt.

Da die einzelnen Farbsensorelemente unterschiedliche Signale für gleiche Helligkeitswerte des Quellbildes erzeugen, werden die Signale entsprechend korrigiert. Beim Abtasten eines farbigen Quellbildes werden farbige Bereiche des Quellbildes unterschiedlich stark mit den unterschiedlichen Farbsensorelementen erfasst. In der Regel ist ein rotes, grünes und blaues Farbsensorelement vorgesehen. Ein grüner Farbbereich im Quellbild wird von dem grünen Farbsensorelement gut detektiert, wohingegen das blaue und rote Farbsensorelement für einen grünen Farbbereich kaum ein Signal ausgeben. Hierdurch entstehen im Zielbild eines farbigen Quellbildes Fehlstellen, die als Frequenz-Artefakte bezeichnet werden. Derartige Frequenz-Artefakte können erkannt und mit entsprechenden Filter korrigiert werden.

Bei diesem Verfahren werden zunächst die mit den unterschiedlichen Farbsensorelementen erhaltenen Pixel sortiert, so dass sie in einer entsprechender Anordnung wie im Quellbild angeordnet sind. Dies ist notwendig, da die unterschiedlichen Sensorelemente voneinander entfernt angeordnet sind, so dass hier für jedes Sensorelement ein Datenstrom entsteht, in welchem die Werte der einzelnen Bildpunkte von Datenstrom zu Datenstrom versetzt zueinander angeordnet sind.

Aus der internationalen Patentanmeldung WO 2005/114573 A1 geht ein Verfahren zur Interpolation und Korrektur eines digitalen Bildes hervor, wobei ein Quellbild auf ein Zielbild mit einem FIR-Filter abgebildet wird. Der FIR-Filter umfasst mehrere Filterkoeffizienten, die sowohl die Information zur Interpolation als auch zur Korrektur des Bildes enthalten. Hierdurch wird in einem einzigen Schritt sowohl die Interpolation als auch die Korrektur des Bildes ausgeführt.

Der Erfindung liegt die Aufgabe zu Grunde ein Verfahren und eine Vorrichtung zum Scannen eines Bildes zu schaffen, um ein Zielbild in Schwarz/Weiß-Darstellung zu erzeugen, wobei eine hohe Abtastrate bei einer hohen Auflösung möglich ist und zugleich das Zielbild schnell erzeugbar ist und im wesentlichen die gleiche Hardware wie beim Erzeugen eines Zielbildes in Farbdarstellung verwendbar ist.

Die Aufgabe wird durch ein Verfahren mit den Merkmalen des Anspruchs 1 und durch eine Vorrichtung mit den Merkmalen des Anspruchs 6 gelöst. Vorteilhafte Ausgestaltungen den Erfindungen sind in den entsprechenden Unteransprüchen angegeben.

Die vorliegende Erfindung stellte eine Weiterentwicklung der Erfindung aus der internationalen Patentanmeldung WO 2007/062679 A1 (PCT/EP2005/012882) dar. Der grundsätzliche Unterschied dieses Verfahrens zu den herkömmlichen Verfahren liegt darin, dass einzelne Bildpunkte (Pixel) des Quellbildes nicht jeweils von allen Farbsensorelementen sondern lediglich von jeweils einem einzigen Farbsensorelement abgetastet werden, wodurch es möglich ist, dass die mehreren Farbsensorelemente gleichzeitig mehrere Bildpunkte abtasten. Hierdurch wird die Abtastgeschwindigkeit erhöht, bzw. eine wesentlich höhere Auflösung bei gleicher Abtastgeschwindigkeit wie bei herkömmlichen Scannvorrichtungen erzielt.

Mit dem erfindungsgemäßen Verfahren werden die Teilfilter direkt auf die einzelnen Farbauszüge angewandt, ohne dass die Farbauszüge zu einer einheitlichen Dateneinheit vermischt werden müssen. Dies erspart einen entsprechenden Sortiervorgang, da durch die Anwendung der Teilfilter die korrekten Bildpunkte der Farbauszüge ausgewählt werden. Zudem wird beim Anwenden von drei kleinen Teilfiltern wesentlich weniger Rechenleistung als beim Anwenden eines wesentlich größeren Gesamtfilters benötigt. Hierdurch wird die automatische Abarbeitung des erfindungsgemäßen Verfahrens wesentlich beschleunigt.

Vorzugsweise wird beim Filtern auch eine Interpolation von den Bildpunkten des Quellbildes auf die Bildpunkte des Zielbildes ausgeführt.

Weiterhin ist es möglich, beim Filtern eine Korrektur des abgetasteten Quellbildes auszuführen. Hierbei kann z.B. die unterschiedliche Empfindlichkeit der Zeilenarrays für Graustufen korrigiert werden. Weiterhin kann eine Korrektur des Frequenzganges des abgetasteten Quellbildes ausgeführt werden.

Mit dem erfindungsgemäßen Verfahren und mit der erfindungsgemäßen Vorrichtung wird die Abbildung der Bildpunkte der mehreren Farbauszüge auf ein Zielbild als Interpolation über einen Längenbereich, der zwei benachbarten Bildpunkten in einem Farbauszug entspricht, ausgeführt Durch den Versatz der Farbauszüge würde bei Überlagerung der Farbauszüge in diesen Längenbereich jeweils ein Bildpunkt der unterschiedlichen Farbauszüge mit jeweils gleichem Abstand zueinander angeordnet sein. Über diese Farbauszüge wird somit interpoliert, wobei eine zusätzliche Interpolation ohne zusätzlichen Verfahrensschritt möglich ist. Bei dieser zusätzlichen Interpolation kann auf Bildpunkte interpoliert werden, die zwischen den Bildpunkten der Farbauszüge angeordnet sind.

Die Erfindung wird nachfolgend beispielhaft näher erläutert. Ein Ausführungsbeispiel ist schematisch in der beigefügten Zeichnung dargestellt. Die Zeichnungen zeigen schematisch in:

Figur 1    die Teile eines Kopierers einschließlich eines Scanners und eines Druckers in einem Blockschaltbild,

Figur 2    einen optischen Sensor des Scanners,

Figur 3    eine Sensoreinheit mit drei Farbsensorelementen, und

Figur 4    ein Blockschaltbild einer Auswerteeinrichtung zum Ausführen des erfindungsgemäßen Verfahrens.

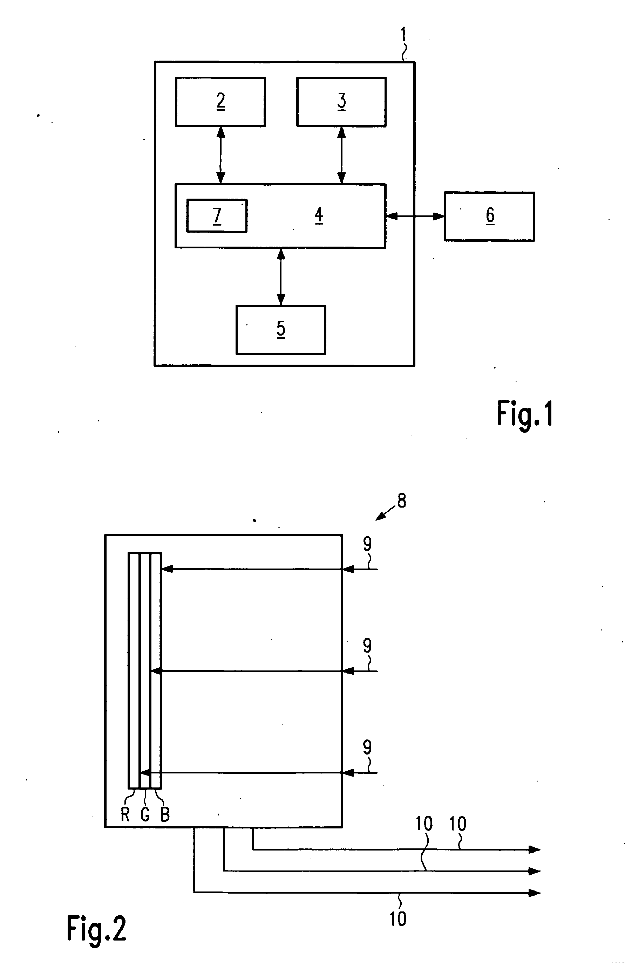

In Figur 1 ist ein Kopierer 1 mit einem Scanner 2 und einem Drucker 3 dargestellt. Eine Steuereinheit 4 steuert den Scanner 2 und den Drucker 3 und ist mit einer Bedienungseinheit 5 und einem externen Netzwerk 6 verbunden.

Wenn der Scanner 2 ein Quellbild abtastet werden die hierbei erzeugten Signale in digitale Daten umgesetzt und in einem Speicher 6 in der Steuereinheit 4 gespeichert. Die im Speicher 7 abgelegten Bilddaten können mittels der Steuereinheit 4 direkt am Drucker 3 ausgedruckt werden oder über das externe Netzwerk 6 versandt werden.

Der Scanner 2 weist einen optischen Sensor 8 auf (Figur 2). Der Sensor 8 ist mit drei parallelen CCD-Zeilenarrays versehen, die jeweils einen Farbsensorelement für die Farben Rot R, Grün G und Blau B bilden. Hierzu sind die CCD-Zeilenarrays jeweils mit einem roten, grünen bzw. blauen Farbfilter versehen.

In Figur 2 sind die CCD-Zeilenarrays unmittelbar aneinander angrenzend angeordnet dargestellt. In der Praxis weisen die einzelnen CCD-Zeilenarrays jeweils aus fertigungstechnischen Gründen einen bestimmten Abstand zueinander auf. Die einzelnen CCD-Zeilenarrays werden mittels Taktsignalen, die über entsprechende Taktsignalleitungen 9 zugeführt werden, angesteuert, wobei bei jedem Takt ein Bildpunkt ausgelesen wird. Die von den CCD-Zeilenarrays ausgelesenen Signale werden über jeweils eine Signalleitung 10 ausgegeben.

Dieser Sensor 8 umfasst somit drei CCD-Zeilenarrays, die jeweils ein Farbsensorelement darstellen und jeweils einen separaten Datenstrom für rote, grüne und blaue Bildpunkte erzeugen.

Die gesamten Daten eines Bildes eines der drei Datenströme wird als Farbauszug bezeichnet. Nach den vollständigen Abtasten eines Quellbildes liegen somit beim vorliegenden Ausführungsbeispiel drei Farbauszüge für die Farben Rot, Grün und Blau vor. Die Farbauszüge stellen ein Koordinatensystem dar, in dem die einzelnen Bildpunkte angeordnet sind. Aufgrund des räumlichen Versatzes der Farb-Sensorelemente R, G, B sind die Farbauszüge in den Koordinatensystemen etwas zueinander versetzt. Der Versatz zwischen zwei Farbauszügen hängt von der Abtastgeschwindigkeit ab, mit welchem der Sensor 8 relativ zum Quellbild bewegt wird.

Im vorliegenden Ausführungsbeispiel beträgt der Versatz zwischen den Farbauszügen zweier benachbarter Farbsensorelemente 15⅓ Bildpunkte. Der Versatz zwischen den Farbauszügen für die Farben Rot und Blau beträgt somit 30$^2/_3$ Bildpunkte.

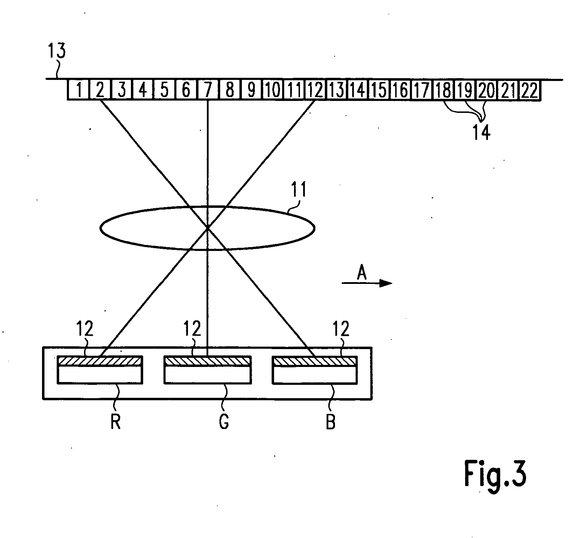

In Figur 3 ist schematisch der Sensor 8 dargestellt. Er umfasst ein Objektiv 11, die drei Farbsensorelemente R, G, B die jeweils mit einem Farbfilter 12 versehen sind und ein Quellbild 13, auf welchem schematisch mehrere Zeilen von Bildpunkten 14 dargestellt und mit den Nummern 1 bis 22 durchnummeriert sind. Wenn die einzelnen Farbsensorelemente R, G, B gleichzeitig zum Detektieren eines Bildpunktes angesteuert werden, dann beträgt bei der in Figur 3 dargestellten Ausführungsform der Versatz zwischen zwei Farbauszügen benachbarter Farbsensorelemente fünf Bildpunkte durch eine zeitlich versetzte Ansteuerung der einzelnen Farbsensorelemente und entsprechende Einstellung der Relativgeschwindigkeit (Pfeil A in Figur 3) können auch nicht ganzzahlige Versätze erzielt werden.

Die mit dem Sensor erfassten Signale werden korrigiert. Dies erfolgt mittels eines Filters.

Die Anwendung eines Filters auf die mit dem Sensor erfassten Bildpunkte wird in der Regel als Vektorprodukt ausgeführt, wobei der Filter ein Vektor mit mehreren Filterkoeffizienten a1, a2, ..., an ist, der mit einem Vektor bestehend aus den vom Sensor erfassten Werten von Bildpunkten multipliziert wird. Diese Bildpunkte, auf die der Filter angewendet wird, sind im Quellbild nebeneinanderliegend angeordnet. Die Anwendung eines Filters auf Bildpunkte ist ausführlich in der

WO 2005/114573 A1 beschrieben.

Um den Filter in herkömmlicher Weise auf die Bildpunkte anzuwenden, müsste man die von den drei Farbsensorelementen erzeugten drei Farbauszüge zu einem einzigen Bild zusammenfassen, in welchem die entsprechenden Bildpunkte gemäß ihrer Position im Quellbild sortiert werden. Bei dem in Figur 2 und 3 dargestellten Sensor 8 ergebe sich somit folgende Abfolge von Bildpunkten:

r0 g0 b0 r1 g1 b1 r2 g2 b2 ...,

wobei die Buchstaben r, g, b das Farbsensorelement kennzeichnen, mit dem der jeweilige Bildpunkt erfasst worden ist und die daran angefügt Ziffer die Position des jeweiligen Bildpunktes in der Zeile des Bildes bezeichnet. Eine solche Sortierung der Bildpunkte ist jedoch aufwendig, insbesondere wenn mit dem Scanner die Quellbilder mit unterschiedlicher Abtastrate und unterschiedlicher Auflösung abgetastet werden sollen, da dann der Sortieralgorithmus der unterschiedlichen Auflösung und Abtastrate jeweils angepasst werden muss. Eine solche Sortierung verursacht eine Vielzahl von Speichervorgängen, die ohne spezielle Hardware (ASICS bzw. FPGA) die Recheneinheit (CPU) der Steuereinheit erheblich in Anspruch nimmt.

Das grundlegende Prinzip der vorliegenden Erfindung liegt darin, dass die drei Datenströme der drei Farbkanäle der drei Farb-Sensorelement nicht vor der Filterung zusammengeführt werden, sondern dass der Filter so ausgestaltet ist, dass erst beim Filtervorgang die entsprechenden Bildpunkte aus den drei Datenströmen bzw. drei Farbauszügen ausgewählt werden. Hierdurch erfolgt die

Auswahl der Bildpunkte der drei Farbauszüge und die Korrektur der mit dem Sensor 8 erfassten Signale der Bildpunkte gleichzeitig in einem einzigen Arbeitsschritt. Der Sortiervorgang wird eingespart, wodurch in Echtzeit das Quellbild erzeugt werden kann.

Zur einfachen Anwendung des Filters werden lediglich die Koordinatensysteme der drei Farbauszüge gleichmäßig zueinander ausgerichtet. Bei dem oben erläuterten Ausführungsbeispiel, bei welchem die Farbauszüge jeweils um 15⅓ Bildpunkte bzw. 30$^2/_3$ Bildpunkte versetzt sind, wird z.B. das Koordinatensystem des grünen Farbauszuges um 15 Bildpunkte zunächst zum roten und das Koordinatensystem des blauen Farbauszuges um 30 Bildpunkte in Richtung zum roten Farbauszug verändert. Hierzu müssen lediglich die Parameter der Koordinatenachsen entsprechend verändert werden. Diese Anpassung kann sehr schnell erfolgen. Diese Anpassung bzw. die Ausrichtung der Koordinatensysteme wird nur bezüglich ganzzahliger Bildpunkte ausgeführt. Versätze um Bruchteile des Abstandes zweier benachbarter Bildpunkte werden hierbei nicht korrigiert.

Die Erfindung wird nachfolgend anhand eines Beispieles mit einem FIR-Filter erläutert, der in drei Teilfilter aufgeteilt wird, die jeweils auf einem Farbauszug angewandt werden.

Weiterhin ist bei der Gestaltung des Filters zu berücksichtigen, dass während des Filtervorganges eine Interpolation durchzuführen ist. Da die Bildpunkte im Zielbild nicht immer im gleichen Raster wie die Bildpunkte im Quellbild angeordnet sind, kann nicht immer ein bestimmter Bildpunkt des Quellbildes auf einen bestimmten Bildpunkt des Zielbildes abgebildet werden. Sondern es muss ein fiktiver Bildpunkt des Quellbildes auf einem Bildpunkt des Zielbildes abgebildet werden, wobei der fiktive Bildpunkt des Quellbildes zwischen zwei tatsächlich erfassten Bildpunkten des Quellbildes liegen kann. Um diesen fiktiven Bildpunkt zu erhalten, ist eine Interpolation notwendig. Deshalb werden beim vorliegenden Ausführungsbeispiel mehrere Sätze von je drei Teilfiltern erzeugt, mit welchen jeweils ein unterschiedlicher Interpolationsschritt erfolgt.

Nachfolgend wird die herkömmliche Anwendung eines Filters mit sechs Filterkoeffizienten a1, a2, ..., a6 auf Bildpunkte im Quellbild dargestellt:

a1    r0

a2    b0
a3    g0
a4    r1
a5    b1
a6    g1
0.    r2
0.    b2 0. g2

Die oben aufgeführten Produkte a1 r0, a2 b0, ..., a6 g1 sind miteinander zu addieren und ergeben den Grauwert eines Bildpunktes im Zielbild, der auf der Position eines fiktiven Bildpunktes im Quellbild exakt zwischen den Bildpunkten g0 und r1 angeordnet ist.

Mit dem folgenden Filter wird ein fiktiver Bildpunkt, der bezüglich der Mitte zwischen den Bildpunkten g0 und r1 des Quellbildes um eine Distanz von 1/11 in Richtung zum Bildpunkt r1 verschoben ist, auf einen Bildpunkt in der entsprechenden Position des Zielbildes abgebildet:

$$0.909091 \text{ a1 r0}$$
$$(0.0909091 \text{ a1} + 0.909091 \text{ a2})$$
$$\text{b0}$$
$$(0.0909091 \text{ a2} + 0.909091 \text{ a3})$$
$$\text{g0}$$
$$(0.0909091 \text{ a3} + 0.909091 \text{ a4}) \text{ r1}$$
$$(0.0909091 \text{ a4} + 0.909091 \text{ a5})$$
$$\text{b1}$$
$$(0.0909091 \text{ a5} + 0.909091 \text{ a6})$$
$$\text{g1}$$
$$0.0909091 \text{ a6 r2}$$

0.    b2
0.    g2

Bei einer weiteren Verschiebung des fiktiven Bildpunktes um 1/11 des Abstandes zweier benachbarter Bildpunkte im Quellbild ergibt sich folgender Filter:

$$0.818182 \text{ a1 r0}$$
$$(0.181818 \text{ a1} + 0.818182 \text{ a2})$$
$$\text{b0}$$
$$(0.181818 \text{ a2} + 0.818182 \text{ a3})$$
$$\text{g0}$$
$$(0.181818 \text{ a3} + 0.818182 \text{ a4}) \text{ r1}$$
$$(0.181818 \text{ a4} + 0.818182 \text{ a5})$$
$$\text{b1}$$
$$(0.181818 \text{ a5} + 0.818182 \text{ a6})$$
$$\text{g1}$$
$$0.181818 \text{ a6 r2}$$
$$0. \text{ b2}$$
$$0. \text{ g2}$$

Entsprechende Filter werden für die weiteren Verschiebungen des fiktiven Bildpunktes um jeweils eine Distanz von jeweils 1/11 des Abstandes zweier benachbarter Bildpunkte des Quellbildes erzeugt. Beim vorliegenden Ausführungsbeispiel wird das bilineare Interpolationsverfahren angewandt. Es sind jedoch auch noch andere Interpolationsverfahren hinlänglich bekannt.

Bei einer Verschiebung des fiktiven Bildpunktes um einen ganzen Abstand (11/11) zweier benachbarter Bildpunkte des Quellbildes ergibt sich wieder der erste Filter, der nun auf die Folge der Bildpunkte des Quellbildes angewandt wird, die mit b0 beginnt und bei r2 endet:

| | |
|---|---|
| 0. | r0 |
| a1 | b0 |
| a2 | g0 |
| a3 | r1 |
| a4 | b1 |
| a5 | g1 |
| a6 | r2 |
| 0. | b2 |
| 0. | g2 |

Bei einem weiteren Versatz um exakt einen ganzen Abstand zwischen zwei benachbarten Bildpunkten des Quellbildes ergibt sich die folgende Anwendung des Filters auf die Bildpunkte:

| | |
|---|---|
| 0. | r0 |
| 0. | b0 |
| a1 | g0 |
| a2 | r1 |
| a3 | b1 |
| a4 | g1 |
| a5 | r2 |
| a6 | b2 |
| 0. | g2 |

In den obigen Darstellungen ist jeweils die vollständige Sequenz von r0 bis g2 aufgeführt, wobei die Bildpunkte des Quellbildes, auf die keiner der Filterkoeffizienten a1 bis a6 angewandt wird, mit dem Faktor 0 multipliziert werden. Diese zusätzlichen Produkte mit dem Faktor 0 sind für die Ausführung der Abbildung der Bildpunkte des Quellbildes auf Bildpunkte des Zielbildes ohne physikalische Bedeutung. Sie sind jedoch für die Erstellung der Teilfilter wichtig.

Bei der Erstellung der Teilfilter wird ausgegangen von Filteranwendung für eine jede Interpolationsverschiebung und für eine jede Farbe. Im vorliegenden Ausführungsbeispiel gibt es insgesamt elf Interpolationsverschiebungen für drei Farben, so dass insgesamt 33 derartige Filteranwendungen zu erstellen sind. Bei einer anderen Wahl von Interpolationsschritten, die an sich beliebig ist, bzw. bei einem anderen Sensor mit einer anderen Anzahl von Farbsensorelementen ist die Anzahl der Filteranwendungen entsprechend abzuändern.

Die 33 Teilfilter werden mit F1r, F1b, F1g, F2r, F2b, F2g, ..., F33r, F33b, F33g bezeichnet, wobei die Zahl in dieser Bezeichnung den Interpolationsschritt bezeichnet und der Buchstabe die jeweilige Farbe angibt, auf welchen Farbauszug der Filter anzuwenden ist.

Aus einer jeden Filteranwendung werden drei Teilfilter erzeugt, indem die Koeffizienten, die mit dem Bildpunkt einer bestimmten Farbe multipliziert werden dem Teilfilter mit der entsprechenden Farbe zugeordnet werden. Aus der oben als erstes aufgeführten Filteranwendung ohne Interpolationsverschiebung werden die Koeffizienten a1, a4, 0 dem Filter F1r zugeordnet. Somit ergeben sich aus der oben aufgeführten ersten Filteranwendung die folgenden drei Teilfilter F1r, F1b, F1g:

$$F1r = \begin{pmatrix} a1 \\ a4 \\ 0 \end{pmatrix}$$

$$F1b = \begin{pmatrix} a2 \\ a5 \\ 0 \end{pmatrix}$$

$$F1g = \begin{pmatrix} a3 \\ a6 \\ 0 \end{pmatrix}$$

Die Filter für die erste Interpolationsverschiebung lauten dementsprechend:

$$F2r = \begin{pmatrix} 0,909091\,a1 \\ 0,0909091\,a3 + 0,909091\,a4 \\ 0,0909091\,a6 \end{pmatrix}$$

$$F2b = \begin{pmatrix} 0,0909091\,a1 + 0,909091\,a2 \\ 0,0909091\,a4 + 0,909091\,a5 \\ 0 \end{pmatrix}$$

$$F2g = \begin{pmatrix} 0,0909091\,a2 + 0,909091\,a3 \\ 0,0909091\,a5 + 0,909091\,a6 \\ 0 \end{pmatrix}$$

Die Teilfilter für die elfte Verschiebung lauten folgendermaßen:

$$F11r = \begin{pmatrix} 0,0909091\,a1 \\ 0,909091\,a3 + 0,0909091\,a4 \\ 0,909091\,a6 \end{pmatrix}$$

$$F11b = \begin{pmatrix} 0,909091\,a1 + 0,909091\,a2 \\ 0,909091\,a4 + 0,0909091\,a5 \\ 0 \end{pmatrix}$$

$$F11g = \begin{pmatrix} 0{,}909091\,a2 + 0{,}0909091\,a3 \\ 0{,}909091\,a5 + 0{,}0909091\,a6 \\ 0 \end{pmatrix}$$

$$F33r = \begin{pmatrix} 0{,}0909091\,a1 \\ 0{,}909091\,a3 + 0{,}0909091\,a4 \\ 0{,}909091\,a6 \end{pmatrix}$$

$$F33b = \begin{pmatrix} 0 \\ 0{,}909091\,a2 + 0{,}0909091\,a3 \\ 0{,}909091\,a5 + 0{,}0909091\,a6 \end{pmatrix}$$

$$F33g = \begin{pmatrix} 0{,}0909091\,a1 \\ 0{,}909091\,a3 + 0{,}0909091\,a4 \\ 0{,}909091\,a6 \end{pmatrix}$$

Die Erzeugung der Teilfilter kann folgendermaßen kurz zusammengefasst werden:

Es werden die Scalarprodukte eines Vektorproduktes des Vektors des Filters mit einem Vektor umfassend die entsprechenden Bildpunkte des Quellbildes erstellt, wobei die Scalarprodukte für eine jede Anwendung des Filters auf eine jede Interpolationsverschiebung erstellt werden. Diese Scalarprodukte werden jeweils für eine vollständige Sequenz von Bildpunkten betrachtet, die mehrere vollständige Sätze von Bildpunkten umfasst, wobei ein Satz Bildpunkte jeweils exakt einem Bildpunkt der unterschiedlichen Farbtypen aufweist (r, b, g). Die Bildpunkte, die mit keinem Filterkoeffizienten multipliziert sind, werden mit 0 multipliziert. Die Teilfilter umfassen als Koeffizienten die Faktoren der Scalarprodukte eines solchen Vektorproduktes, die mit jeweils einem Bildpunkt einer bestimmten Farbe multipliziert sind. Diese Faktoren werden in der selben Anordnung wie im Vektorprodukt im Teilfilter übernommen.

Werden nun entsprechende Sequenzen in den unterschiedlichen Farbauszügen mit den entsprechenden Teilfiltern multipliziert (Vektorprodukt) und werden die sich hieraus ergebenden Werte addiert, so erhält man den Grauton für den entsprechenden Bildpunkt im Zielbild. Man kann also die Teilfilter unmittelbar auf die einzelnen Farbauszüge anwenden, ohne dass man die Farbauszüge zu einer einheitlichen Dateneinheit vermischt. Dies erspart zum einem den entsprechenden Sortiervorgang. Zudem wird beim Anwenden von drei kleinen Teilfiltern wesentlich weniger Rechenleistung als beim Anwenden eines wesentlich größeren Gesamtfilters benötigt. Hierdurch wird die automatische Abarbeitung des erfindungsgemäßen Verfahrens wesentlich beschleunigt.

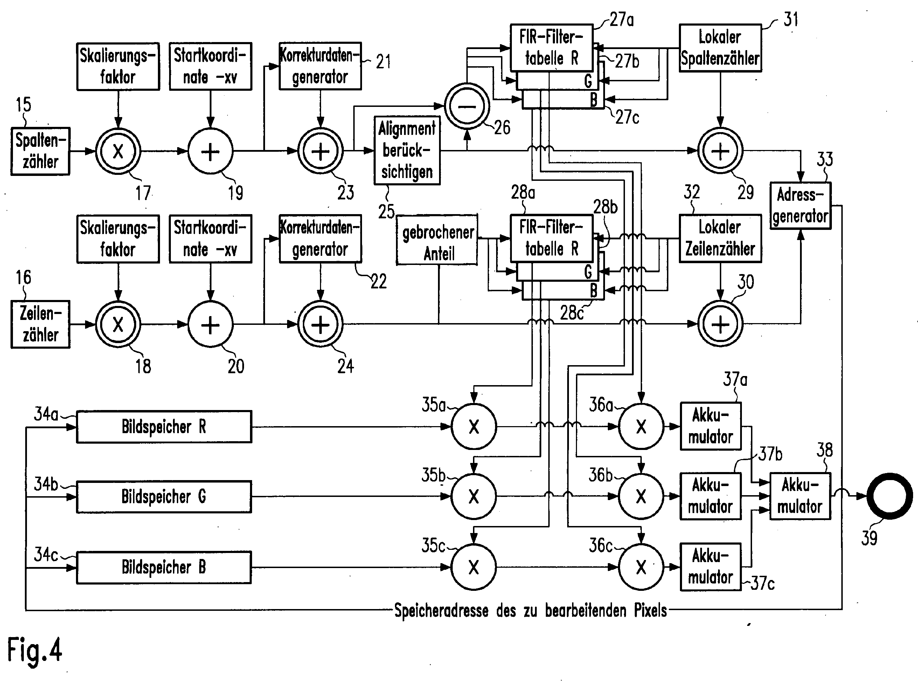

In Figur 4 ist in einem Blockschaltbild eine Vorrichtung zum Ausführen des erfindungsgemäßen Verfahrens schematisch dargestellt. Diese Vorrichtung weist einen Spaltenzähler 15 und einen Zeilenzähler 16 auf. Der Spaltenzähler 15 zählt die Spalten im Zielbild. Der Zeilenzähler 16 zählt die Zeilen im Zielbild. Wenn der Spaltenzähler 15 einmal alle Spalten im Zielbild durchgezählt hat, dann zählt der Zeilenzähler um eine Zeile weiter. Somit werden die Bildpunkte des Zielbildes zeilenweise aufeinanderfolgend durchgezählt. Diese beiden Zähler 15, 16 geben somit vor, bei welchem Bildpunkt im Zielbild die Abbildung aus dem Quellbild ausgeführt werden soll.

Dem Spaltenzähler 15 und dem Zeilenzähler 16 ist jeweils ein Multiplikator 17, 18 nachgeschaltet, mit welchem die Spaltenzahl bzw. die Zeilenzahl mit einem korrespondierenden Skalierungsfaktor multipliziert werden. Der Skalierungsfaktor stellt die Schrittweite im Quellbild dar, so dass der Abstand zweier Bildpunkte im Zielbild, d.h. der Abstand zwischen zwei benachbarten Spalten bzw. Zeilen, auf das Quellbild in der Einheit des Abstandes zweier benachbarter Bildpunkte im Quellbild abgebildet werden.

Dem Multiplikatoren 17, 18 sind jeweils Addierer 19, 20 nachgeschaltet, die zu der jeweiligen Spalten- bzw. Zeilenzahl jeweils eine Startkoordinate hinzu addieren. Bei dieser Startkoordinate wird zum einem der Bildausschnitt im Quellbild festgelegt, der auf das Zielbild abgebildet werden soll. Zum anderen zentriert die Startkoordinate die FIR-Filter um den jeweiligen Bildpunkt im Quellbild, was unten näher erläutert wird. Die derart korrigierten Spalten- und Zeilenzahlen werden jeweils einem Korrekturdatengenerator 21, 22 und einem Addierer 23, 24 zugeführt. Die Korrekturdatengeneratoren 21, 22 berechnen anhand einer vorgegebenen Funktion oder einer Look-up-Tabelle aus der zugeführten Spalten- und Zeilenzahl einen Korrekturwert der z.B. einen Verzeichnungsfehler korrigiert, der bei der Erzeugung des Quellbildes durch Verwendung einer bestimmten Optik hervorgerufen wird. Diese Korrekturwert wird dem jeweiligen Addierer 23, 24 zugeführt und mit der entsprechenden Spalten- bzw. Zeilenzahl addiert. Die derart erhaltene Spalten- und Zeilenzahl gibt die Koordinate im Quellbild an, ab der der oben erläuterte FIR-Filter zur Berechnung des Bildpunktes des Zielbildes mit den vom Spaltenzähler 15 und Zeilenzähler 16 vorgegebenen Spalten- und Zeilenzahl berechnen kann.

Dem Addierer 23 folgt ein Element zur Alignment-Korrektur 25 und in einer Abzweigung ein Subtrahierer 26. Das Element zur Alignment-Korrektur 25 und der Subtrahierer 26 werden zunächst bei der Erläuterung der erfindungsgemäßen Vorrichtung nicht berücksichtigt. Über diese Abzweigung, die zu den FIR-Filterteiltabellen 27a, 27b, 27c führt, wird den FIR-Filterteiltabellen 27a, 27b, 27c der gebrochene Anteil der Spaltenzahl zugeführt.

Dem Addierer 24 sind in entsprechender Weise die FIR-Filterteiltabellen 28a, 28b, 28c nachgeordnet, denen der gebrochene Anteil der Zeilenzahl zugeführt wird. Die ganzzahligen Anteile der Spaltenzahl bzw. der Zeilenzahl werden einem Addierer 29 bzw. 30 zugeführt. Zwischen den Addierern 29, 30 und den FIR-Filterteiltabellen 27a, 27b, 27c, 28a, 28b, 28c ist jeweils ein lokaler Spaltenzähler 31 bzw. ein lokaler Zeilenzähler 32 zwischengeschaltet. Beim Anlegen einer bestimmten Spalten- bzw. Zeilenzahl an die Addierer 29, 30 zählen der lokale Spaltenzähler 31 und der lokale Zeilenzähler 32 jeweils von 0 bis n-1, wobei n die Anzahl der Filterkoeffizienten ist. Die Zählerzahl i des lokalen Spaltenzählers 15 wird an die FIR-Filterteiltabellen 27a, 27b, 27c weitergegeben und demgemäss (i-ter Filterwert) wird aus dem dem zweiten gebrochenen Anteil korrespondierenden Filter der entsprechende Filterwert ausgewählt, d.h. dass der FIR-Teilfilter anhand des gebrochenen Anteils (entspricht der Interpolationsverschiebung) ausgewählt wird und dann aus dem jeweiligen FIR-Teilfilter der Filterkoeffizient ausgelesen wird. Hierbei werden jeweils ein Filterwert aus den drei FIR-Teilfiltern 27a, 27b, 27c ausgelesen.

In entsprechender Weise werden bei den FIR-Teilfiltertabellen 18a, 18b, 18c die Filterwerte in Abhängigkeit des gebrochenen Anteils und des Zählerwertes des lokalen Zeilenzählers 32 ausgewählt. Der Zählerwert des lokalen Spaltenzählers 31 wird am Addierer 29 der ganzzahligen Spaltenzahl hinzuaddiert, wodurch die dem korrespondierenden Filterwert entsprechende Spaltenzahl berechnet wird. In entsprechender Weise wird der Zählerwert des lokalen Zeilenzählers 32, der dem Addierer 30 zugeführten ganzzahligen Zeilenzahl hinzugefügt. Jeweils ein Ausgangswert des Addierers 29 (Spaltenzahl) und ein Ausgangswert des Addierers 30 (Zeilenzahl) bilden ein Koordinatenpaar, das einem Adressgenerator 33 zugeführt wird. Im Adressgenerator 33 werden diese Koordinaten in korrespondierende Adressdaten umgesetzt, die die Adresse in Bildspeichern 20a, 20b, 20c angeben. Die Bildspeicher 20a, 20b, 20c enthalten die Farbauszüge des Quellbildes und die vom Adressgenerator 33 erzeugten Adressen bezeichnen in den Bildspeichern 20a, 20b, 20c die Daten der Farbauszüge, die den dem Adressgenerator 33 zugeführten Koordinatenpaaren entsprechen. Aus den Bildspeichern 34a, 34b, 34c werden dann die entsprechenden Werte ausgelesen, zunächst an erste Multiplizierer 35a, 35b, 35c mit den Filterwerten aus den FIR-Teilfiltertabellen 28a, 28b, 28c und dann an zweiten Multiplizieren 36a, 36b, 36c mit den Filterwerten aus den FIR-Teilfiltertabellen 27a, 27b, 27c multipliziert. Zum Berechnen eines Bildpunktes wird der lokale Spaltenzähler 31 für einen jeden Schritt im lokalen Zeilenzähler 32 einmal durchlaufen, d.h., dass nach jedem Durchlauf des lokalen Spaltenzählers 31 der lokale Zeilenzähler 32 um eins erhöht wird. Die hierbei ermittelten Werte werden in Teilakkumulatoren 37a, 37b, 37c zu Teilwerten aufsummiert und dann werden die aufsummierten Werte einem Akkumulator 38 zugeführt, mit dem die drei Teilwerte aufsummiert werden. Der Gesamtwert stellt den Grauwert des Bildpunktes im Zielbild dar, der durch die vom Spaltenzähler 15 vorgegebene Spaltenzahl und die vom Zeilenzähler 16 vorgegebene Zeilenzahl definiert ist.

Nach Ausgabe (Ausgabe 39) des entsprechenden Grauwertes wird der Spaltenzähler 16 um eins erhöht und ein erneuter Grauwert berechnet, wobei der lokale Spaltenzähler 31 und der lokale Zeilenzähler 32 erneut einmal ihren Wertebereich durchlaufen.

Ist der Spaltenzähler an der letzten Spalte angelangt, so wird er wieder auf 0 gesetzt und beginnt bei der ersten Spalte und der Zeilenzähler wird um eins erhöht. Sind sowohl der Spaltenzähler als auch der Zeilenzähler an ihren Maximalwerten angelangt, so ist das vollständige Zielbild berechnet.

Da FIR-Filter separierbar sind, können die erfindungsgemäßen Filterberechnungen gleichzeitig sowohl in Spalten- als auch in Zeilenrichtung ausgeführt und durch aufeinander folgendes Multiplizieren an den ersten und zweiten Multiplizierern 35a, 35b, 35c, 36a, 36b, 36c überlagert werden.

Mit dem oben erläuterten Element 25 zur Alignment-Korrektur kann die Eigenschaft von Rechnern ausgenutzt werden, dass sie in der Regel mit 32 Bit umfassenden Datenwörtern arbeiten obwohl nur 8 Bit zur Beschreibung eines Bildpunktes benötigt werden. Mit dem Lesen eines Datenwortes können somit die Werte von vier Bildpunkten mit einem Zugriff geholt werden. Das Element zur Alignment-Korrektur berücksichtigt dies und setzt die Spaltenzahl derart, dass am Adressgenerator 33 die nächst kleinere durch 4 teilbare Adresse anliegt. Diese Abrundung hat die Wirkung einer Verschiebung nach links.

Diese Verschiebung könnte durch eine entsprechende Multiplexereinrichtung wieder rückgängig gemacht werden, die diese Verschiebung wieder ausgleicht. Eleganter ist es jedoch, diese ganzzahlige Verschiebung gemeinsam mit der Subbildpunktverschiebung im Filter zu bearbeiten und mit den ohnehin vorhandenen FIR-Teilfiltertabellen zu kompensieren. Hierzu erzeugt der Differenzierer 26 die Differenz zwischen der am Adressengenerator 33 anliegenden Spaltenzahl und der vom Addierer 23 ausgegebenen Spaltenzahl. Die Differenz ergibt dann die Summe einer ganzzahligen Verschiebung und der durch den gebrochenen Anteil gebildeten Subbildpunktverschiebung. Mit dem Filter wird somit nicht nur die Subbildpunktverschiebung sondern auch die Verschiebung um mehrere Bildpunkte entsprechend der Abrundung der Speicherzugriffsadresse ausgeführt.

Die oben an Hand von Figur 4 beschriebene Vorrichtung ist eine Hardware-Schaltung zum Abbilden eines Quellbildes auf ein Zielbild. Diese Hardware-Schaltung ist aus einfachen Standardkomponenten ausgebildet, weshalb sie kostengünstig herstellbar ist. Sie erlaubt zudem eine sehr schnelle Abbildung des Quellbildes auf das Zielbild.

Die Erfindung kann selbstverständlich auch durch ein Datenverarbeitungsprogramm realisiert werden, das auf einem entsprechenden Mikroprozessor zur Ausführung gebracht wird.

Das erfindungsgemäße Verfahren ist zur Anwendung in einem Scanner, insbesondere einem Hochleistungsscanner, vorgesehen, mit welchem die Abtastgeschwindigkeit von 800 Blatt DIN A4 pro Minute auf 2400 Blatt DIN A4 gesteigert werden kann, wobei jedes Blatt abgetastet, interpoliert und mit einer entsprechenden Übertragungsfunktion korrigiert wird.

Die vorliegende Erfindung stellte eine Weiterentwicklung der Erfindung aus der PCT/EP2005/012882 dar.

Die Erfindung ist oben anhand eines Beispiels beschrieben worden, bei welchem mittels dreier Zeilenarrays, die jeweils zum Detektieren einer unterschiedlichen Farbe ausgebildet sind, drei Farbauszüge erzeugt werden, die dann auf ein Schwarz-/Weiß-Bild abgebildet werden.

Die Erfindung kann folgendermaßen kurz zusammengefasst werden:

Die Erfindung betrifft ein Verfahren und eine Vorrichtung zum Scannen eines Bildes, wobei ein Quellbild mittels eines Farbsensors erfasst wird. Der Farbsensor weist mehrere Zeilenarrrays auf, die jeweils zum Detektieren einer bestimmten Farbe ausgebildet sind. Mit diesen Zeilenarrays werden Farbauszüge erzeugt. Erfindungsgemäß werden auf die Farbauszüge separate FIR-Teilfilter angewandt, ohne dass die Farbauszüge zuvor zu einem vollständigen Farbbild gemischt werden. Das Mischen der Bildpunkte erfolgt automatisch beim Filtern.

Hierdurch ist es möglich, dass die mehreren Zeilenarrays simultan Bildpunkte des Quellbildes abtasten und diese Bildpunkte in Echtzeit auf Bildpunkte eines Zielbildes abgebildet werden können.

Bezugszeichenliste

1       Kopierer
2       Scanner
3       Drucker
4       Steuereinheit
5       Bedienungseinheit
6       externes Netzwerk
7       Speicher
8       Sensor
9       Taktsignalleitung
10      Signalleitung
11      Objektiv
12      Farbfilter
13      Quellbild
14      Bildpunkt
15      Spaltenzähler
16      Zeilenzähler
17      Multiplizierer
18      Multiplizierer
19      Addierer

**EP 1 985 105 B1**

| | |
|---|---|
| 20 | Addierer |
| 21 | Korrekturdatengenerator |
| 22 | Korrekturdatengenerator |
| 23 | Addierer |
| 24 | Addierer |
| 25 | Alignment-Einheit |
| 26 | Subtrahierer |
| 27a | FIR-Filtertabelle R |
| 27b | FIR-Filtertabelle G |
| 27c | FIR-Filtertabelle B |
| 28a | FIR-Filtertabelle R |
| 28b | FIR-Filtertabelle G |
| 28c | FIR-Filtertabelle B |
| 29 | Addierer |
| 30 | Addierer |
| 31 | lokaler Spaltenzähler |
| 32 | lokaler Zeilenzähler |
| 33 | Adressgenerator |
| 34a | Bildspeicher R |
| 34b | Bildspeicher G |
| 34c | Bildspeicher B |
| 35a | Multiplizierer |
| 35b | Multiplizierer |
| 35c | Multiplizierer |
| 36a | Multiplizierer |
| 36b | Multiplizierer |
| 36c | Multiplizierer |
| 37a | Teilakkumulator |
| 37b | Teilakkumulator |
| 37c | Teilakkumulator |
| 38 | Akkumulator |
| 39 | Ausgabe |

**Patentansprüche**

1.  Verfahren zum Scannen eines Bildes mit folgenden Schritten:

    - Abtasten eines Quellbildes mit einem Sensor (8), der mehrere Zeilenarrays umfasst, die jeweils zum Detektieren einer bestimmten Farbe ausgebildet sind, so dass von jedem Zeilenarray ein Farbauszug eines abzutastenden Quellbildes erzeugt wird, wobei die Farbauszüge das Quellbild in Form von Bildpunkten darstellen, wobei das Abtasten durch Bewegen des Sensors (8) relativ zum Quellbild in Abtastrichtung erfolgt, wobei die Bildpunkte der unterschiedlichen Farbauszüge eines bestimmten Quellbildes zueinander etwas in Abtastrichtung versetzt sind,
    - separates Filtern der Farbauszüge mit mehreren FIRTeilfiltern, die jeweils auf einem Farbauszug angewandt werden, und Summieren der gefilterten Bildpunkte des Quellbildes der mehreren Farbauszüge zu Bildpunkten eines Zielbildes, wobei beim Filtern eine Korrektur der unterschiedlichen Empfindlichkeiten der Zeilenarrays für Graustufen und eine Interpolation von den Bildpunkten der Farbauszüge des Quellbildes auf die Bildpunkte des Zielbildes ausgeführt wird, wobei die Bildpunkte im Zielbild in einem anderen Raster als die Bildpunkte der Farbauszüge im Quellbild angeordnet sein können, und
    - als Zielbild ein Schwarz/Weiß-Bild erzeugt wird.

2.  Verfahren nach 1,
    **dadurch gekennzeichnet,**
    **dass** beim Filtern eine Korrektur des Frequenzganges des abgetasteten Quellbildes ausgeführt wird.

3.  Verfahren nach Anspruch 1 oder 2,
    **dadurch gekennzeichnet,**

**dass** die Bildpunkte der Farbauszüge eines bestimmten Quellbildes zueinander um jeweils einen Abstand versetzt sind, der dem Abstand zweier benachbarter Bildpunkte in einem Farbauszug geteilt durch die Anzahl der Farbauszüge entspricht.

4. Verfahren nach einem der Ansprüche 1 bis 3,
   **dadurch gekennzeichnet, dass** drei Farbauszüge in den Farben Rot, Grün und Blau erzeugt werden.

5. Verfahren nach einem der Ansprüche 1 bis 4,
   **dadurch gekennzeichnet,**
   **dass** die FIR-Teilfilter mit folgenden Schritten erzeugt werden:

   - Es werden die Scalarprodukte eines Vektorproduktes des Vektors eines vorbestimmten FIR-Filters mit einem Vektor umfassend die entsprechenden Bildpunkte des Quellbildes erstellt, wobei die Scalarprodukte für eine jede Anwendung des FIR-Filters auf vorbestimmte Interpolationsverschiebungen erstellt werden.
   - Diese Scalarprodukte werden jeweils für eine vollständige Sequenz von Bildpunkten des Quellbildes betrachtet, die mehrere vollständige Sätze von Bildpunkten umfasst, wobei ein Satz Bildpunkte jeweils exakt einem Bildpunkt der unterschiedlichen Farben (r, b, g) aufweist.
   - Die Bildpunkte, die mit keinem Filterkoeffizienten multipliziert sind, werden mit 0 multipliziert.
   - Die Teilfilter umfassen als Koeffizienten die Faktoren der Scalarprodukte eines solchen Vektorproduktes, die mit jeweils einem Bildpunkt einer bestimmten Farbe multipliziert sind und diese Faktoren werden in der selben Anordnung wie im Vektorprodukt im Teilfilter übernommen.

6. Vorrichtung zum Scannen eines Bildes mit

   - einem Sensor (8), der mehrere Zeilenarrays zum Abtasten eines Quellbildes mittels einer relativen Bewegung des Sensors (8) zum Quellbild in Abtastrichtung umfasst, wobei die Zeilenarrays jeweils zum Detektieren einer bestimmten Farbe ausgebildet sind, so dass von jedem Zeilenarray ein Farbauszug eines abzutastenden Quellbildes erzeugt wird, wobei die Farbauszüge das Quellbild in Form von Bildpunkten darstellen, wobei die Bildpunkte der Farbauszüge eines bestimmten Quellbildes zueinander etwas in Abtastrichtung versetzt sind, und
   - einer Steuereinheit (4), die derart ausgebildet ist, dass auf die Farbauszüge jeweils ein FIR-Teilfilter angewendet wird, um die Bildpunkte der mehreren Farbauszüge auf ein einzelnes Zielbild abzubilden, wobei beim Filtern eine Korrektur der unterschiedlichen Empfindlichkeiten der Zeilenarrays für Graustufen und eine Interpolation von den Bildpunkten der Farbauszüge des Quellbildes auf die Bildpunkte des Zielbildes ausgeführt, wird wobei die Bildpunkte im Fielbild im einem anderen Raster als die Bildpunkte der Farbauszüge im Quellbild angeordnet sein konnen, und
   - als Zielbild ein Schwarz/Weiß-Bild erzeugt wird.

7. Vorrichtung nach Anspruch 6,
   **dadurch gekennzeichnet, dass** die Steuereinheit (4) zum Ausführen des Verfahrens nach einem der Ansprüche 1 bis 5 ausgebildet ist.

8. Vorrichtung nach Anspruch 6 oder 7,
   **dadurch gekennzeichnet, dass** die Steuereinheit als Hardwareschaltung ausgebildet ist, umfassend

   - einen Spaltenzähler (15), dem ein Multiplizierer (12) zum Multiplizieren der Spaltenzahl mit einem Scalierungsfaktor nachgeschaltet ist,
   - einen Zeilenzähler (16), dem ein Multiplizierer (18) zum Multiplizieren mit einem Scalierungsfaktor nachgeschaltet ist,
   - Korrekturmittel für die Spaltenzahl und Zeilenzahl (19, 20, 21, 22, 23, 24),
   - der Spaltenzahl zugeordnete FIR-Teilfiltertabellen (27a, 27b, 27c),
   - der Zeilenzahl zugeordnete FIR-Teilfiltertabellen (28a, 28b, 28c),
   - einen lokalen Spaltenzähler (31), anhand dessen Wert die entsprechenden Filterkoeffizienten aus den FIR-Teilfiltertabellen (27a, 27b, 27c) ausgelesen werden und dessen Wert der Spaltenzahl mittels eines Addierers (29) hinzu addiert wird,
   - einen lokalen Zeilenzähler (32) anhand dessen Wert die Filterkoeffizienten der FIR-Filtertabelle (18a, 28b, 28c) ausgelesen werden und dessen Wert der Zeilenzahl mittels eines Addierers (30) hinzu gezählt wird,
   - einen Adressgenerator (33), der an Hand der korrigierten und durch den lokalen Spaltenzähler beziehungsweise lokalen Zeilenzähler ergänzten Spalten-/Zeilenzahl eine Adresse für Bildspeicher (34a, 34b, 34c) erzeugt, in denen die Farbauszüge des Quellbilds gespeichert sind,
- zwei Sätze von Multiplizierern (35a, 35b, 35c; 36a, 36b, 36c), die die Werte der durch den Adressgenerator (33) erzeugten Adresse vorgegebenen Bildpunkte der Farbauszüge mit den Filterkoeffizienten multiplizieren, und
- Akkumulatoren (37a, 37b, 37c, 38), die alle mit den Filterkoeffizienten multiplizierten Bildwerte für einen Durchlauf des lokalen Spaltenzählers für einen jeden Wert des lokalen Zeilenzählers aufsummieren.

9. Vorrichtung nach Anspruch 6 oder 7,
**dadurch gekennzeichnet, dass** die Steuereinheit (40) einen Mikroprozessor aufweist, in dem ein Datenverarbeitungsprogramm zum Ausführen des Verfahrens nach einem der Ansprüche 1 bis 5 gespeichert und ausführbar ist.

10. Vorrichtung nach Anspruch 6 oder 7,
**dadurch gekennzeichnet, dass** die Vorrichtung einen Mikroprozessor aufweist und ein Datenverarbeitungsprogramm zum Berechnen der Filterkoeffizienten gespeichert und ausführbar ist.

11. Scanner mit einer Vorrichtung nach einem der Ansprüche 6 bis 10.

**Claims**

1. A method for scanning an image comprising the following steps:

    - scanning a source image with a sensor (8) that comprises multiple line arrays that are respectively designed to detect a specific colour, such that a colour separation of a source image to be scanned is generated by each line array, the colour separations representing the source image in the form of pixels, wherein the scanning takes place by moving the sensor (8) relative to the source image in scanning direction, wherein the pixels of the different colour separations of a specific source image are somewhat offset relative to one another in scanning direction,
    - separate filtering of the colour separations with multiple FIR sub-filters, which are respectively applied to one colour separation, and summation of the filtered pixels of the source image of the multiple colour separations into pixels of a target image, wherein in the filtering a correction of the different sensitivities in the line arrays for grey levels and an interpolation of the pixels of the colour separations of the source image to the pixels of the target image is executed, wherein the pixels in the target image may be arranged in another raster than the pixels of the colour separations in the source image, and
    - a black-and-white image is generated as a target image.

2. The method according to claim 1,
**characterized in that**
a correction of the frequency response of the scanned source image is executed upon filtering.

3. The method according to claim 1 or 2,
**characterized in that**
the pixels of the colour separations of a specific source image are offset relative to one another by a distance which corresponds to the distance of two adjacent pixels in a colour separation, divided by the number of colour separations.

4. The method according to one of the claims 1 to 3, **characterized in that**
three colour separations are generated in the colours red, green and blue.

5. The method according to one of the claims 1 to 4, **characterized in that**
the FIR sub-filters are generated with the following steps:

    - The scalar products of a vector product of the vector of a predetermined FIR filter are generated with a vector comprising the corresponding pixels of the source image, wherein the scalar products for each application of the FIR filter are generated at predetermined interpolation shifts.
    - These scalar products are respectively considered for a complete sequence of pixels of the source image that comprises multiple complete sets of pixels, wherein a set of pixels respectively has exactly one pixel of the different colours (r, b, g).

- The pixels that are multiplied with no filter coefficient are multiplied with 0.
- The sub-filters comprise as coefficients the factors of the scalar products of such a vector product that are multiplied with a respective pixel of a specific colour, and these factors are adopted in the same arrangement as in the vector product in the sub-filter.

6. A device for scanning an image with

- a sensor (8) that comprises multiple line arrays for scanning a source image by means of a relative movement of the sensor (8) to the source image in scanning direction, wherein the line arrays are respectively designed to detect a specific colour, such that a colour separation of a source image to be scanned is generated by each line array, the colour separations representing the source image in the form of pixels, wherein the pixels of the colour separations of a specific source image are somewhat offset relative to one another in scanning direction, and
- a control unit (4) that is designed such that a FIR sub-filter is respectively applied to the colour separations in order to map the pixels of the multiple colour separations to a single target image,
wherein in the filtering a correction of the different sensitivities in the line arrays for grey levels and an interpolation of the pixels of the colour separations of the source image to the pixels of the target image is executed, the pixels in the target image may be arranged in another raster than the pixels of the colour separations in the source image, and
- a black-and-white image is generated as a target image.

7. The device according to claim 6,
   **characterized in that**
   the control unit (4) is designed to execute the method according to one of the claims 1 to 5.

8. The device according to claim 6 or 7,
   **characterized in that**
   the control unit is fashioned as a hardware circuit, comprising

   - a column counter (15), downstream of which a multiplier (12) for multiplication of the column count with a scaling factor is arranged,
   - a line counter (16) downstream of which a multiplier (18) for multiplication with a scaling factor is arranged,
   - correction means for the column count and line count (19, 20, 21, 22, 23, 24),
   - FIR sub-filter tables (27a, 27b, 27c) associated with the column count,
   - FIR sub-filter tables (28a, 28b, 28c) associated with the line count,
   - a local column counter (31) on the basis of which value the corresponding filter coefficients are read out from the FIR sub-filter tables (27a, 27b, 27c) and whose value is added to the column count by means of an adder (29),
   - a local line counter (32) on the basis of which value the filter coefficients are read out from the FIR sub-filter tables (28a, 28b, 28c) and whose value is added to the line count by means of an adder (30),
   - an address generator (33) that generates an address for image memories (34a, 34b, 34c) using the corrected column/line count expanded by the local column counter or, respectively, local line counter, in which image memories (34a, 34b, 34c) the colour separations of the source image are stored,
   - two sets of multipliers (35a, 35b, 35c; 36a, 36b, 36c) that multiply the values of the pixels of the colour separations (predetermined by the address generated by the address generator (33)) with the filter coefficients, and
   - accumulators (37a, 37b, 37c, 38) that add up all image values multiplied with the filter coefficients from one pass of the local column counter for each value of the local line counter.

9. The device according to claim 6 or 7,
   **characterized in that**
   the control unit (40) has a microprocessor in which a data processing program for executing the method according to one of the claims 1 to 5 is stored and can executed.

10. The device according to claim 6 or 7,
    **characterized in that**
    the device has a microprocessor, and a data processing program for calculating the filter coefficients is stored and can be executed.

**11.** A scanner with a device according to one of the claims 6 to 10.

**Revendications**

**1.** Procédé d'analyse d'une image, ledit procédé comportant les étapes suivantes consistant à :

- balayer une image source au moyen d'un capteur (8) qui comporte plusieurs réseaux de lignes qui sont conformés chacun de façon à détecter une couleur déterminée de sorte qu'une extraction chromatique d'une image source à balayer est générée par chaque réseau de lignes, les extractions chromatiques représentant l'image source sous la forme de points d'image, l'analyse étant effectuée en déplaçant le capteur (8) par rapport à l'image source dans la direction de balayage, les points d'image des différentes extractions chromatiques d'une image source déterminée étant légèrement décalées l'une de l'autre dans la direction de balayage,
- filtrer séparément les extractions chromatiques au moyen de plusieurs filtres partiels FIR qui sont appliqués chacun à une extraction chromatique et ajouter les points d'image filtrés de l'image source des plusieurs extractions chromatiques à des points d'image d'une image cible ; lors du filtrage, une correction des différentes sensibilités des réseaux de lignes de l'image cible est effectuée pour les niveaux de gris et une interpolation est effectué des points d'image des extractions chromatiques de l'image source sur les points d'image de l'image cible, les points d'image de l'image cible pouvant être disposés suivant une trame différente de celle des points d'image des extractions chromatiques de l'image source, et
- une image en noir et blanc étant générée comme image cible.

**2.** Procédé selon la revendication 1, **caractérisé en ce qu'**une correction de la réponse en fréquences de l'image source balayée est effectuée lors du filtrage.

**3.** Procédé selon la revendication 1 ou 2, **caractérisé en ce que** les points d'image des extractions chromatiques d'une image source déterminée sont décalés l'un de l'autre à chaque fois avec un écartement qui correspond à l'écartement de deux points d'image voisins d'une extraction chromatique divisé par le nombre d'extractions chromatiques.

**4.** Procédé selon l'une des revendications 1 à 3, **caractérisé en ce que** trois extractions chromatiques sont générés dans les couleurs rouge, verte et bleue.

**5.** Procédé selon l'une des revendications 1 à 4, **caractérisé en ce que** les filtres partiels à réponse impulsionnelle finie (RIF) sont générés avec les étapes suivantes :

- on établit les produits scalaires d'un produit vectoriel du vecteur d'un filtre RIF prédéterminé avec un vecteur comportant les points d'image correspondants de l'image source, les produits scalaires étant établis pour chaque application du filtre RIF à des déphasages d'interpolation prédéterminés ;
- ces produits scalaires sont à chaque fois considérés pour une séquence complète de points d'image de l'image source qui comporte plusieurs ensemble complet de points d'image, un ensemble de points d'image possédant à chaque fois exactement un point d'image de différentes couleurs (r, b, v) ;
- les points d'image qui ne sont multipliés par aucun coefficient de filtrage sont multipliés par 0 ;
- les filtres partiels comportent comme coefficients les facteurs des produits scalaires d'un tel produit vectoriel qui sont multipliés à chaque fois avec un point d'image d'une couleur déterminée et ces facteurs sont repris dans le filtre partiel dans le même ordre que dans le produit vectoriel.

**6.** Dispositif d'analyse d'une image, ledit dispositif comportant

- un capteur (8) qui comporte plusieurs réseaux de lignes destinés à balayer une image source en déplaçant le capteur (8) relativement à l'image source dans le sens de balayage, les réseaux de lignes étant conformés chacun pour détecter une couleur déterminée de sorte qu'une extraction chromatique d'une image source à balayer est générée par chaque réseau de lignes, les extractions chromatiques se présentant sous la forme de points d'image, les points d'image des extractions chromatiques d'une image source déterminée étant légèrement décalés l'un de l'autre dans la direction de balayage, et
- une unité de commande (4) qui est conformée de telle façon qu'un filtre partiel RIF est à chaque fois appliqué aux extractions chromatiques pour appliquer les points d'image des plusieurs extractions chromatiques à une image cible individuelle, lors du filtrage une correction des différentes sensibilités des réseaux de lignes étant effectuée pour des niveaux de gris et une interpolation étant effectuée des points d'image des extractions chromatiques de l'image source aux points d'image de l'image cible, les points d'image de l'image cible pouvant être disposés suivant une trame différente de celle des points d'image des extractions chromatiques de l'image source ; et

- une image en noir et blanc étant générée comme image cible.

7. Dispositif selon la revendication 6, **caractérisé en ce que** l'unité de commande (4) est conformée pour mettre en oeuvre le procédé selon l'une des revendications 1 à 5.

8. Dispositif selon la revendications 6 ou 7, **caractérisé en ce que** l'unité de commande est conformée en circuit matériel qui comporte

- un compteur de colonnes (15) en aval duquel est monté un multiplicateur (12) destiné à multiplier le nombre de colonnes par un facteur de cadrage,
- un compteur de lignes (16) en aval duquel est monté un multiplicateur (18) destiné à effectuer une multiplication par un facteur de cadrage,
- des moyens de correction du nombre de colonnes et du nombre de lignes (19, 20, 21, 22, 23, 24),
- des tables de filtres partiels RIF (27a, 27b, 27c) qui sont associés au nombre de colonnes,
- des tables de filtres partiels RIF (28a, 28b, 28c) qui sont associés au nombre de lignes,
- un compteur de colonnes local (31) dont la valeur est utilisée pour lire les coefficients de filtre correspondants dans les tables de filtres partiels RIF (27a, 27b, 27c) et dont la valeur est ajoutée au nombre de colonnes au moyen d'un additionneur (29),
- un compteur de lignes local (32) dont la valeur est utilisée pour lire les coefficients de filtre correspondants dans les tables de filtres partiels RIF (28a, 28b, 28c) et dont la valeur est ajoutée au nombre de lignes au moyen d'un additionneur (30),
- un générateur d'adresses (33) qui génère, grâce au nombre de colonnes/lignes corrigé et complété par le compteur de colonnes local ou le compteur de lignes local, une adresse pour des mémoires d'image (34a, 34b, 34c) dans lesquelles sont mémorisées les extractions chromatiques de l'image source,
- deux ensembles de multiplicateurs (35a, 35b, 35c ; 36a, 36b, 36c) qui multiplient les valeurs de l'adresse de points d'image prescrits des extractions chromatiques, qui est générée par le générateur d'adresses (33), par les coefficients de filtre, et
- des accumulateurs (37a, 37b, 37c, 38) qui additionnent toutes les valeurs d'image, multipliées par les coefficients de filtre, pour un cycle du compteur de colonnes local pour chaque valeur du compteur de lignes local.

9. Dispositif selon la revendication 6 ou 7, **caractérisé en ce que** l'unité de commande (40) comporte un microprocesseur dans lequel est mémorisé et peut être exécuté un programme de traitement de données destiné à mettre en oeuvre le procédé selon l'une des revendications 1 à 5.

10. Dispositif selon la revendication 6 ou 7, **caractérisé en ce que** le dispositif comporte un microprocesseur et **en ce qu'**un programme de traitement de données est mémorisé et peut être exécuté pour calculer les coefficients de filtre.

11. Scanner comportant un dispositif selon l'une des revendications 6 à 10.

1

2

3

7    4

6

5

**Fig.1**

8

9

9

9

R G B

10   10

10

**Fig.2**

Fig.3

Fig.4

# EP 1 985 105 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 5923447 A
- DE 19835348 A1
- EP 1961207 A1
- WO 2007062679 A1
- EP 2005012882 W
- WO 2005114573 A1